# EUROPEAN PATENT SPECIFICATION

(11) **EP 3 612 003 B1**
(45) Date of publication and mention of the grant of the patent: **25.10.2023**
(21) Application number: 17905133.9
(22) Date of filing: 13.07.2017
(51) Int. Cl.: H05B 6/12, H05B 6/06, H02J 7/02, H02J 50/10, H05B 6/36, H05B 3/00

(54) **ELECTRONIC INDUCTION HEATING-TYPE COOKING APPARATUS**
KOCHVORRICHTUNG VOM TYP ELEKTRONISCHER INDUKTIONSERWÄRMUNG
APPAREIL DE CUISSON DE TYPE À CHAUFFAGE PAR INDUCTION ÉLECTRONIQUE

(30) Priority: 10.04.2017 KR 20170045942
(43) Date of publication of application: 19.02.2020
(73) Proprietor: LG Electronics Inc., Seoul 07336 (KR)
(72) Inventor: KWAG, Dongseong, Seoul 08592 (KR); KIM, Yangkyeong, Seoul 08592 (KR)
(74) Representative: Vossius & Partner Patentanwälte Rechtsanwälte mbB
(86) International application number: PCT/KR2017/007536
(87) International publication number: WO 2018/190470

(56) References cited:
- EP-A2- 1 441 567
- DE-A1- 19 852 617
- JP-A- S60 256 729
- KR-A- 20140 128 650
- US-A1- 2007 131 669
- US-A1- 2011 303 652
- US-A1- 2011 303 652
- US-A1- 2013 313 248
- US-B2- 6 864 468

## Description

### TECHNICAL FIELD

The present disclosure relates to an electromagnetic induction heating cooking appliance. The present disclosure relates to an electromagnetic induction heating cooking appliance that heats food or materials for food accommodated in its body by electromagnetic induction heating, transmits/receives power wirelessly between the door and the body, eliminates wires for transmitting/receiving signals to achieve a simpler structure, and is used safely and conveniently.

### BACKGROUND ART

Typically, a cooking appliance is used to cook various foods such as rice, soup and stew or to warm up materials for food or food with heating devices.

Among them, an electromagnetic induction heating cooking appliance is used to cook food by generating heat with electromagnetic force. It utilizes the principle that when a metal is placed in a changing magnetic field, an eddy current is generated by electromagnetic induction, such that heat is generated in the metal by the current.

In addition, various products such as microwave oven using microwave, an oven using a heater, a cooktop, and the like are widely used as cooking appliances. The microwave oven heats food by exposing it to electromagnetic radiation generated by a magnetron in a sealed cooking chamber to vibrate water molecules in the food, thereby producing thermal energy. The oven uses a heater to heat the sealed cooking chamber to heat food therein.

In existing cooking appliances, electronic devices such as a display and input buttons is mounted on the door, a power supply line for supplying power to the electronic devices is connected to the door from the body of the cooking appliance. In addition, since the power supply line is exposed to the outside, it deteriorates the appearance. Further, the power supply line may be damaged as the door is opened and closed repeatedly, resulting in safety issues in using the cooking appliance.

In addition, in an existing oven toaster, the door is coupled with the body via a hinge. Accordingly, it may be inconvenient to put bread or a food container into the cooking chamber of the oven toaster or the contents may be spilled.

To overcome this, a cooking plate such as a heating plate or a supporting plate may be drawn into and out of the oven toaster as the door moves. In doing so, the power supply line is also drawn into and out of the oven toaster as the door moves. Therefore, it is structurally complicated and deteriorates the appearance.

In addition, in an existing cooking appliance in which electronic devices such as a display and input buttons are mounted on the door, a communications wire for transmitting and receiving information to and from the body of the cooking appliance is connected to the door from the body, in addition to the power supply line. In this case, too, the communications line is exposed to the outside, which deteriorates the appearance and is very inconvenient for use.

In addition, in an existing pop-up toaster, it is very difficult to clean it. An existing oven type toaster has an infrared heater at its bottom, and it is difficult to clean it.

US 2011/303652 A1 relates to cooking devices in which an operation unit is provided on a door.

EP 1 441 567 A2 discloses an electric oven which can transmit heat of heat source to a cavity faster by applying an induction heating at both sides of the cavity.

### DISCLOSURE

### TECHNICAL PURPOSE

It is an object of the present disclosure to provide an electromagnetic induction heating cooking appliance capable of wirelessly supplying electric power to a door on which electronic devices are mounted to allow for a simpler structure and capable of preventing a safety accident associated with a power supply line.

It is another object of the present disclosure to provide an electromagnetic induction heating cooking appliance implemented as an oven toaster, in which a heating plate or a bottom board is coupled with the door and is drawn out of or into the oven toaster as the door moves such that a food container or bread can be conveniently placed on the heating plate or the bottom board, and in which a power is supplied to the door wirelessly such that the oven has a simpler structure and can be used safely.

It is another object of the present disclosure to provide an electromagnetic induction heating cooking appliance in which the door can transmit/receive information to/from the body.

It is yet another object of the present disclosure to provide an electromagnetic induction heating cooking appliance implemented as an oven toaster which can be easily cleaned as the heating plate or the support is drawn out of or into the oven toaster as the door moves.

### TECHNICAL SOLUTIONS

In accordance with one aspect of the present disclosure, an electromagnetic induction heating cooking appliance includes a door including a wireless power reception module, and a body including a wireless power transmitter. Accordingly, the door may receive power wirelessly from the body to operate electronic devices mounted on the door by using it.

The door may include a heating plate or a bottom board, such that the heating plate or the bottom board is drawn out of or into the body as the door moves. Accordingly, a food container or food material can be easily placed on the heating plate or the bottom board, and power can be wirelessly supplied to the door, such that the electromagnetic induction heating cooking appliance can have a simpler structure and operate safely.

Each of the door and the body includes its own wireless communications module. Accordingly, the door can transmit/receive information to/from the body.

The heating plate or the bottom board where food material or a food container is placed can be mounted on the door. Accordingly, the heating plate or the bottom board is drawn out of or into the body as the door moves, such that it is easy to clean it.

According to an exemplary embodiment of the present disclosure, electronic devices mounted on the door are operated by receiving power from the body wirelessly, and thus it is possible to prevent a safety accident associated with a power supply line even if the door is opened and closed repeatedly, and the electromagnetic induction heating cooking appliance can have a simpler structure.

According to an exemplary embodiment of the present disclosure, as the heating plate or the bottom board is mounted on the door and can be drawn out of or into the body together with the door, a food container or food material can be conveniently placed on the heating plate or the bottom board. In addition, as power is supplied to the door wirelessly, no power supply line is exposed and no element for taking power supply lines out of or into the body, such that the electromagnetic induction heating cooking appliance can have a simpler structure and can be used safely.

According to an exemplary embodiment of the present disclosure, there is provided a wireless electromagnetic induction heating cooking appliance in which the door on which electronic devices are mounted can transmit/receive information to/from the body wirelessly.

According to an exemplary embodiment of the present disclosure, the heating plate or the bottom board can be drawn into or out of the cooking appliance as the door moves, such that it is easy to clean it and it is convenient to use.

In addition to the above-described effects, specific effects of the present disclosure will be described together with embodiments to be described below.

### TECHNICAL EFFECTS

The electromagnetic induction having cooking appliance according to the present disclosure has an effect of capable of wirelessly supplying electric power to a door on which electronic devices are mounted to allow for a simpler structure and capable of preventing a safety accident associated with a power supply line.

Further, the electromagnetic induction having cooking appliance according to the present disclosure has an effect of providing an electromagnetic induction heating cooking appliance implemented as an oven toaster, in which a heating plate or a bottom board is coupled with the door and is drawn out of or into the oven toaster as the door moves such that a food container or bread can be conveniently placed on the heating plate or the bottom board, and in which a power is supplied to the door wirelessly such that the oven has a simpler structure and can be used safely.

Moreover, the electromagnetic induction having cooking appliance according to the present disclosure has an effect of providing an electromagnetic induction heating cooking appliance in which the door can transmit/receive information to/from the body.

### BRIEF DESCRIPTION OF THE DRAWINGS

FIG. 1 is a block diagram schematically showing an electromagnetic induction heating cooking appliance according to a first exemplary embodiment of the present disclosure;
FIG. 2 is a perspective view of an oven toaster as an example of the electromagnetic induction heating cooking appliance shown in FIG. 1 according to an exemplary embodiment of the present disclosure;
FIG. 3 is a view schematically showing the oven toaster shown in FIG. 2;
FIG. 4 is a block diagram schematically showing an electromagnetic induction heating cooking appliance according to a second exemplary embodiment of the present disclosure;
FIG. 5 is a block diagram schematically showing an electromagnetic induction heating cooking appliance according to a third exemplary embodiment of the present disclosure;
FIG. 6 is a perspective view of an oven toaster as an example of the electromagnetic induction heating cooking appliance shown in FIG. 5 according to an exemplary embodiment of the present disclosure; and
FIG. 7 is a block diagram schematically showing an electromagnetic induction heating cooking appliance according to a fourth exemplary embodiment of the present disclosure.

### DETAILED DESCRIPTIONS

Terms and words used in the present specification and claims are not to be construed as a general or dictionary meaning but are to be construed meaning and concepts meeting the technical ideas of the present invention based on a principle that the inventors can appropriately define the concepts of terms in order to describe their own inventions in best mode. Therefore, while the present invention are description with reference to the certain particular embodiments and the accompanying drawings, it is to be understood that the embodiments are merely illustrative and various equivalents and modifications are possible without departing from the spirit and scope of the present disclosure as defined in the following claims.

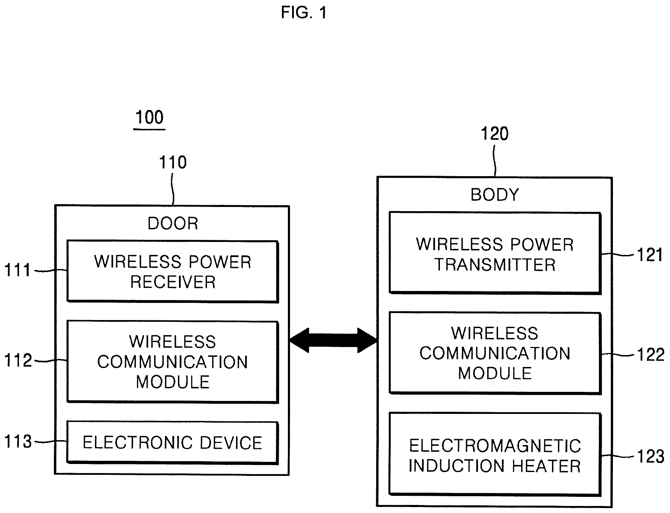

FIG. 1 is a block diagram schematically showing an electromagnetic induction heating cooking appliance according to a first exemplary embodiment of the present disclosure.

As shown in FIG. 1, an electromagnetic induction heating cooking appliance 100 includes a door 110 and a body 120. The door 110 is to open/close the internal space formed in the body 120 and is coupled with the body 120.

More specifically, the body 120 includes a wireless power transmitter 121, a wireless communication module 122, and an electromagnetic induction heating module 123.

The wireless power transmitter 121 may transmit power to the door 110 wirelessly by magnetic induction or magnetic resonance.

In addition, the wireless communication module 122 is for wirelessly transmitting/receiving signals to/from the door 110.

The electromagnetic induction heating module 123 is for heating materials or food accommodated in the internal space of the body 120 with an induced current.

The wireless communication module 122 and the electromagnetic induction heating module 123 are disposed such that they face the door 110. This is to avoid that the induced current or the electromagnetic wave for wireless communications is blocked due to a structural feature such as the heating plate included in the electromagnetic induction heating module 123.

The door 110 includes a wireless power reception module 111, a wireless communication module 112, and electronic devices 113.

The wireless power reception module 111 receives power wirelessly via the wireless power transmitter 121 of the body 120 and is positioned to face the wireless power transmitter 121.

The wireless communication module 112 is for transmitting/receiving information to/from the body by conducting wireless communications with the wireless communication module 122 and is positioned to face the wireless communication module 122.

The electronic devices 113 may be implemented as a display and input mounted on the door 110 and are connected to the wireless power reception module 111 to receive power via the wireless power reception module 111.

The electronic devices 113 transmit/receive information to/from the wireless communications module 122 of the body 120 via the door wireless communications module 112 and the transmitted/received information may be displayed on the electronic devices 113.

With the above-described configuration, the door 110 of the electromagnetic induction heating cooking appliance 100 according to the first exemplary embodiment may receive electric power from the body 120 wirelessly, may transmit/receive information to/from the body 120 wirelessly, and may display information associated with the body on the electronic devices, e.g., a display.

In addition, the electromagnetic induction heating cooking appliance 100 may be implemented as a variety of electronic products including an electromagnetic induction heating module and a door.

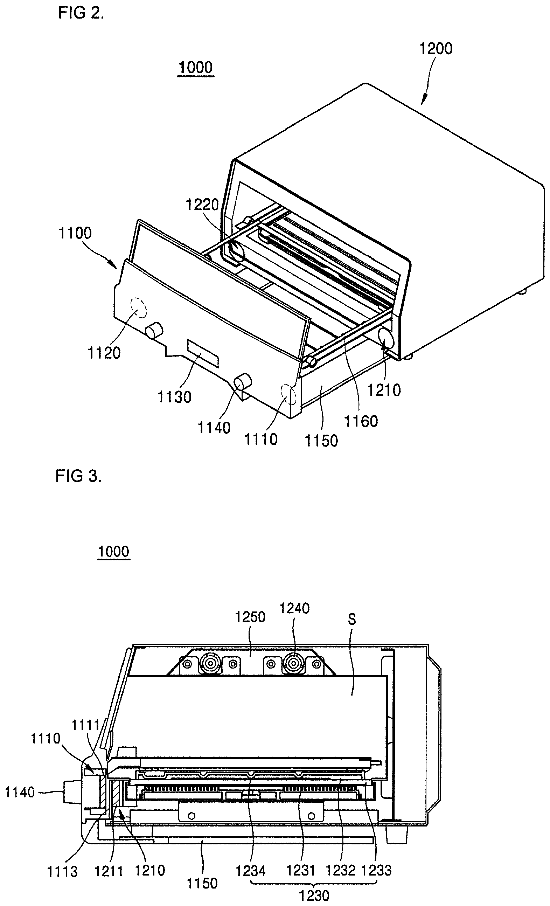

FIG. 2 is a perspective view of an oven toaster as an example of the electromagnetic induction heating cooking appliance shown in FIG. 1 according to an exemplary embodiment of the present disclosure. FIG. 3 is a view schematically showing the oven toaster shown in FIG. 2.

As shown in the drawings, the oven toaster 1000 includes a door 1100 and a body 1200.

The door 1100 is for opening and closing a space S formed in the body 1200. It may be coupled to the body 1200 to cover the space S or may be drawn out of the body 1200 to open the space S.

More specifically, the body 1200 has the space S for accommodating bread or a food container to be heated or cooked, and includes a wireless power transmitter 1210, a wireless communication module 1220, and an electromagnetic induction heating module 1230.

The wireless power transmitter 1210 is disposed to face the door 1100 and may include a transmitting coil 1211 and an inverter (not shown) for supplying power to the transmitting coil 1211.

The wireless communication module 1220 is for wirelessly transmitting/receiving signals to/from the door wireless communications module 1120.

That is, the wireless communication module 1220 receives the information on the display 1130 and the input 1140 of the door 1100 via the door wireless communications module 1120 and transmits the information on the body 1200 to the door 1100.

To this end, the wireless communication module 1220 includes a board for wireless communications and may be a local area communications module. In addition, the wireless communication module 1220 may be positioned to face the door 1100.

The electromagnetic induction heating module 1230 is for heating bread or food accommodated in the space S and includes a working coil 1231, a heating plate 1232, a bottom board 1233, and a temperature sensor 1234.

The heating plate 1232 is made of a magnetic material, and heat is generated with an induced current generated by the working coil 1231.

The bottom board 1233 is for supporting the heating plate 1232 and may be made of a ceramic plate so as not to interfere with the transmission of the induced current.

In addition, the temperature sensor 1234 is for measuring the temperature of the heating plate 1232 and may be placed in contact with the central portion of the heating plate 1232.

To this end, a hole (not shown) may be formed in the bottom board 1233, and the temperature sensor 1234 may be inserted into the hole to measure the temperature of the heating plate 1232 in contact with it.

Alternatively, the temperature of the heating plate 1232 may be measured without contact by making a part of the bottom board 1233 transparent and using a non-contact temperature sensor.

The electromagnetic induction heating module 1230 may be disposed at the lower portion of the body 1200 such that it generates heat upwardly. An infrared heater 1240 may be disposed at the upper portion of the body 1200.

A reflection plate 1250 for reflecting radiant heat from the heating plate 1232 heated by the working coil 1231 may be mounted at the upper portion of the body 1200.

The door 1100 includes a wireless power reception module 1110, a door wireless communications module 1120, a display 1130, and input 1140.

The wireless power reception module 1110 includes a receiving coil 1111 and is disposed to face the wireless power transmitter 1210. That is, when the door 1100 is coupled to the body 1200 so as to cover the space S, the receiving coil 1111 is located adjacent to the transmitting coil 1211 such that it faces the transmitting coil 1211.

The wireless power reception module 1110 receives power from the wireless power transmitter 1210 of the body 1200.

The door wireless communications module 1120 is for transmitting/receiving information to/from the wireless communication module 1220 and is positioned to face the wireless communication module 1220.

The display 1130 is for displaying the operating state of the body 1200 or an input menu.

The input 1140 allows the menu displayed on the display 1130 to be selected to operate the electromagnetic induction heating module of the body and receives power via the wireless power reception module 1110.

The input 1140 and the display 1130 may be formed integrally and may be implemented as a touch screen.

Further, a support plate 1150 is formed at the lower end of the door 1100. The support plate 1150 may be drawn into the body to be in contact with it to open/close the internal space of the body 1200 or may guide the door out of the body 1200 when it is drawn out of it.

A pocket (not shown) for guiding the support plate 1150 may be formed in the body 1200.

Further, the door 1100 may further include a holding wire 1160 for supporting bread or a food container.

The holding wire 1160 may be drawn out of or into the space S of the body as the door 1100 is opened or closed, and faces the electromagnetic induction heating module 1230 when it is drawn into the space S.

Also, in the electromagnetic induction heating cooking appliance according to an exemplary embodiment of the present disclosure, the heating plate is coupled with the door 1100, such that it may be drawn out of or into the space depending on the opening/closing of the door to be disposed to face the working coil.

In addition, the wireless power transmitter 1210 and the wireless communication module 1221 may be implemented by forming grooves in a surface of the body 1200 facing the door 1100 and burying the wireless power reception module 1110 in the grooves and to cover it with a cover.

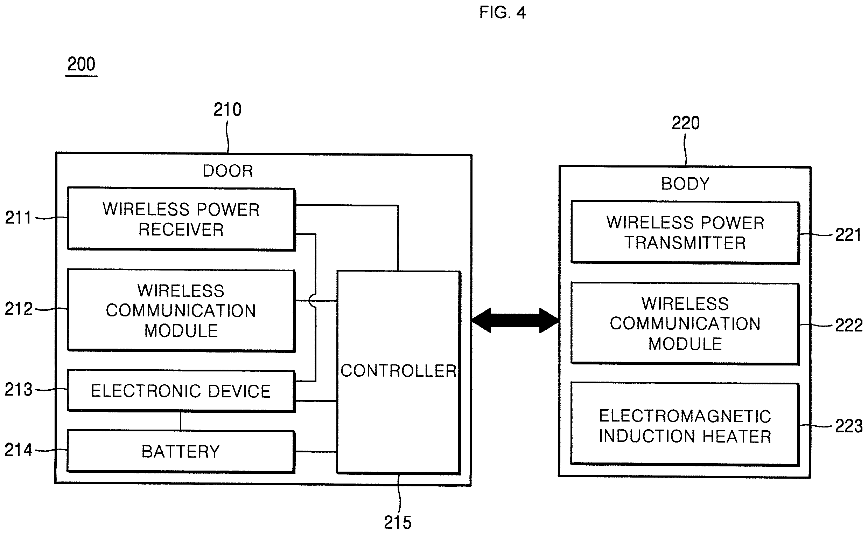

FIG. 4 is a block diagram schematically showing an electromagnetic induction heating cooking appliance according to a second exemplary embodiment of the present disclosure.

As shown in FIG. 4, an electromagnetic induction heating cooking appliance 200 is identical to the electromagnetic induction heating cooking appliance 100 shown in FIG. 1 except that the former further includes a battery.

More specifically, the electromagnetic induction heating cooking appliance 200 includes a door 210 and a body 220.

In addition, the body 120 includes a wireless power transmitter 221, a wireless communication module 222, and an electromagnetic induction heating module 223.

The door 210 includes a wireless power reception module 211, a door wireless communications module 212, electronic devices 213, a battery 214, and a controller 215.

The electronic devices 213 of the door 210 may receive power via the wireless power reception module 211 that is powered by the wireless power transmitter 221 of the body 220 or may receive power from the battery 214.

The power is supplied to the electronic devices 213 under the control of the controller 215.

With the above-described configuration, in the electromagnetic induction heating cooking appliance 200, when the door 210 is drawn out of the body 220 and thus the wireless power reception module 211 of the door 210 cannot receive power wirelessly from the wireless power transmitter 221 of the body 220, the electronic devices 213 can receive power via the battery 214.

That is, the controller 215 checks the amount of power supplied to the electronic devices 213 via the wireless power reception module 211. If the amount is small, the controller 215 controls the battery 214 so that it supplies power to the electronic device.

The battery may be a wireless rechargeable battery.

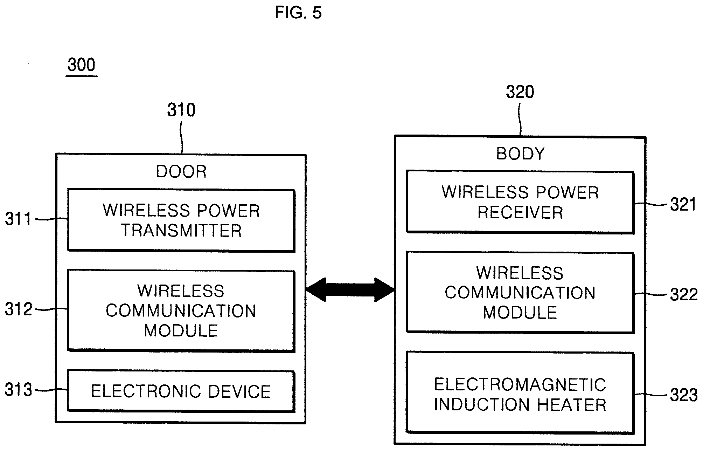

FIG. 5 is a block diagram schematically showing an electromagnetic induction heating cooking appliance according to a third exemplary embodiment of the present disclosure.

As shown in FIG. 5, the electromagnetic induction heating cooking appliance 300 is identical to the electromagnetic induction heating cooking appliance 100 shown in FIG. 1 except for where a wireless power transmitter and a wireless power reception module are mounted.

More specifically, the electromagnetic induction heating cooking appliance 300 includes a door 310 and a body 320.

The body 320 includes a wireless power reception module 321, a wireless communications module 322, and an electromagnetic induction heating module 323.

The door 310 includes a wireless power transmitter 311, a door wireless communications module 312, and electronic devices 313. The electronic devices 313 may include a display and input.

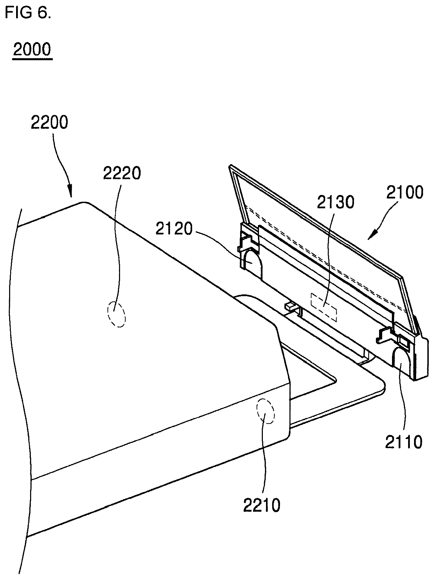

FIG. 6 is a perspective view of an oven toaster as an example of the electromagnetic induction heating cooking appliance shown in FIG. 5 according to an exemplary embodiment of the present disclosure.

As shown in FIG. 6, the oven toaster 2000 includes a door 2100 and a body 2200.

More specifically, the body 2200 includes a wireless power reception module 2210, a wireless communication module 2220, and an electromagnetic induction heating module (not shown). The electromagnetic induction heating module is identical to the electromagnetic induction heating module 1230 shown in FIG. 3.

The door 2100 includes a wireless power transmitter 2110, a door wireless communications module 2120, a display 2130, and input (not shown).

The input is identical to the input 1140 shown in FIG. 2.

The wireless power reception module 2210 of the body 2200 is positioned to face the wireless power transmitter 2110 of the door 2100, and the wireless communication module 2220 is positioned to face the door wireless communications module 2120.

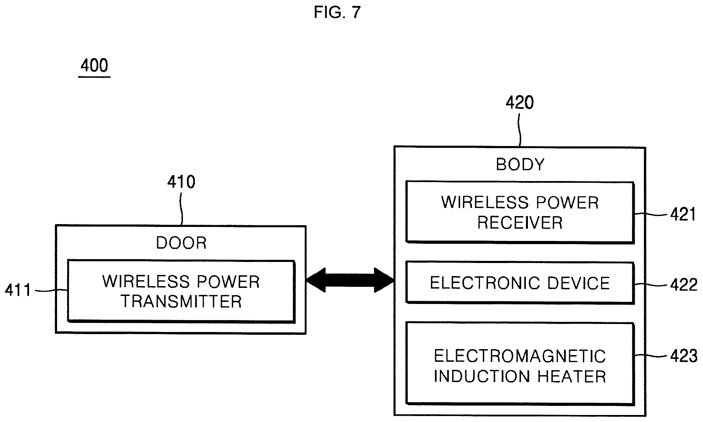

FIG. 7 is a block diagram schematically showing an electromagnetic induction heating cooking appliance according to a fourth exemplary embodiment of the present disclosure.

As shown in FIG. 7, the electromagnetic induction heating cooking appliance 400 is identical to the electromagnetic induction heating cooking appliance 300 shown in FIG. 5 except whether there is a wireless communications module and where electronic devices are mounted.

More specifically, the electromagnetic induction heating cooking appliance 400 includes a door 410 and a body 420.

The body 420 includes a wireless power reception module 421, electronic devices 422, and an electromagnetic induction heating module 423. Also, the door 410 includes a wireless power transmitter 411.

Accordingly, the electronic device 422 including a display and input may receive power via the wireless power transmitter of the door, and may receive power from the body via a wired connection.

## Claims

1. An electromagnetic induction heating cooking appliance (100, 200), comprising:
a body (120, 220, 1200, 2200) comprising a wireless power transmitter (121, 221 1210, 2210) that is configured to transmit power wirelessly;
a first wireless communication module (122, 222, 1220, 2220) that is configured to transmit and receive signals wirelessly; and
an electromagnetic induction heater (123, 223, 1230) that is configured to heat food accommodated in a space in the body (120, 220, 1200, 2200) by using an induced current; and
**characterized in that**:
a door (110, 210, 1100, 2210) comprising a wireless power receiver (111, 211); a second wireless communication module (112, 221) being positioned to face the first wireless communication module (122, 222, 1220, 2220) of the body (120, 220, 1200, 2200) based on closing of the door (110, 210, 1100, 2210); and
an electronic device (113, 213) configured to receive power via the wireless power receiver (111, 211), wherein the door (110, 210, 1100, 2210) is coupled with the body (120, 220, 1200, 2200) such that the door (110, 210, 1100, 2210) opens and closes the space in the body (120, 220, 1200, 2200).

2. The cooking appliance (100, 200) of claim 1, wherein the wireless power transmitter (121, 221 1210, 2210) comprises a transmitting coil (1211), wherein the wireless power receiver (111, 211) comprises a receiving coil (1111) facing the transmitting coil (1211), and wherein the transmitting coil (1211) is adjacent to the receiving coil (1111) when the door (110, 210, 1100, 2210) is coupled with the body (120, 220, 1200, 2200) to cover the space.

3. The cooking appliance (100, 200) of claim 1, wherein the electromagnetic induction heater (123, 223, 1230) comprises:
a working coil (1231) configured to generate an induced current;
a heating plate (1232) that is made of a magnetic material and configured to generate heat with the induced current; and
a bottom board (1233) configured to support the heating plate (1232) and is provided between the working coil (1231) and the heating plate (1232).

4. The cooking appliance (100, 200) of claim 3, wherein the electromagnetic induction heater (123, 223, 1230) further comprises:
a temperature sensor (1234) configured to measure a temperature of the heating plate (1232), wherein an end of the temperature sensor (1234) is inserted into a hole formed in the bottom board (1233) and is in contact with the heating plate (1232).

5. The cooking appliance (100, 200) of claim 3, wherein a portion of the bottom board (1233) is transparent, and wherein the electromagnetic induction heater (123, 223, 1230) further comprises a non-contact temperature sensor configured to measure a temperature of the heating plate (1232) without contacting the heating plate (1232).

6. The cooking appliance (100, 200) of claim 3, wherein the electromagnetic induction heater (123, 223, 1230) is provided at a lower portion of the body(120, 220, 1200, 2200), and wherein the body (120, 220, 1200, 2200) further comprises an infrared heater (1240) and a reflection plate (1250) configured to reflect radiant heat from the heating plate (1232), the infrared heater (1240) and the reflection plate (1250) being coupled to an upper portion of the body (120, 220, 1200, 2200).

7. The cooking appliance (100, 200) of claim 1, wherein the electronic device (113, 213) comprises a display (1130) on which an operating state of the cooking appliance (100, 200) and a menu are displayed, and an input (1140) that allows the menu to be selected.

8. The cooking appliance (100, 200) of claim 1, wherein the door (110, 210, 1100, 2210) further comprises a holding wire (1160) configured to support food, wherein the holding wire (1160) is drawn out of the space of the body (120, 220, 1200, 2200) and drawn into the space to face the electromagnetic induction heater (123, 223, 1230) depending on the opening and closing of the door (110, 210, 1100, 2210).

## Patentansprüche

1. Kochvorrichtung zur elektromagnetischen Induktionserwärmung (100, 200), aufweisend:
einen Körper (120, 220, 1200, 2200), der einen drahtlosen Energiesender (121, 221, 1210, 2210) aufweist, der konfiguriert ist, Energie drahtlos zu übertragen;
ein erstes drahtloses Kommunikationsmodul (122, 222, 1220, 2220), das konfiguriert ist, Signale drahtlos zu übertragen und zu empfangen; und
eine elektromagnetische Induktionserwärmungseinrichtung (123, 223, 1230), die konfiguriert ist, in einem Raum in dem Körper (120, 220, 1200, 2200) aufgenommene Lebensmittel unter Verwendung eines induzierten Stroms zu erwärmen; und
**gekennzeichnet durch**
eine Tür (110, 210, 1100, 2210), die einen drahtlosen Energieempfänger (111, 211) aufweist; ein zweites drahtloses Kommunikationsmodul (112, 221), das basierend auf einem Schließen der Tür (110, 210, 1100, 2210) positioniert ist, um dem ersten drahtlosen Kommunikationsmodul (122, 222, 1220, 2220) des Körpers (120, 220, 1200, 2200) zugewandt zu sein; und
eine elektronische Vorrichtung (113, 213), die konfiguriert ist, Energie über den drahtlosen Energieempfänger (111, 211) zu empfangen, wobei die Tür (110, 210, 1100, 2210) mit dem Körper (120, 220, 1200, 2200) derart gekoppelt ist, dass die Tür (110, 210, 1100, 2210) den Raum in dem Körper (120, 220, 1200, 2200) öffnet und schließt.

2. Kochvorrichtung (100, 200) nach Anspruch 1, wobei der drahtlose Energiesender (121, 221, 1210, 2210) eine Übertragungsspule (1211) aufweist, wobei der drahtlose Energieempfänger (111, 211) eine Empfangsspule (1111) aufweist, die der Übertragungsspule (1211) zugewandt ist, und wobei die Übertragungsspule (1211) zu der Empfangsspule (1111) benachbart ist, wenn die Tür (110, 210, 1100, 2210) mit dem Körper (120, 220, 1200, 2200) gekoppelt ist, um den Raum abzudecken.

3. Kochvorrichtung (100, 200) nach Anspruch 1, wobei die elektromagnetische Induktionserwärmungseinrichtung (123, 223, 1230) aufweist:
eine Arbeitsspule (1231), die konfiguriert ist, einen induzierten Strom zu erzeugen;
eine Erwärmungsplatte (1232), die aus einem magnetischen Material hergestellt ist und konfiguriert ist, Wärme mit dem induzierten Strom zu erzeugen; und
eine Unterplatte (1233), die konfiguriert ist, die Erwärmungsplatte (1232) zu tragen, und zwischen der Arbeitsspule (1231) und der Erwärmungsplatte (1232) bereitgestellt ist.

4. Kochvorrichtung (100, 200) nach Anspruch 3, wobei die elektromagnetische Induktionserwärmungseinrichtung (123, 223, 1230) ferner aufweist:
einen Temperatursensor (1234), der konfiguriert ist, eine Temperatur der Erwärmungsplatte (1232) zu messen, wobei ein Ende des Temperatursensors (1234) in ein in der Unterplatte (1233) ausgebildetes Loch eingeführt ist und mit der Erwärmungsplatte (1232) in Kontakt steht.

5. Kochvorrichtung (100, 200) nach Anspruch 3, wobei ein Abschnitt der Unterplatte (1233) transparent ist und wobei die elektromagnetische Induktionserwärmungseinrichtung (123, 223, 1230) ferner einen kontaktlosen Temperatursensor aufweist, der konfiguriert ist, eine Temperatur der Erwärmungsplatte (1232) zu messen, ohne die Erwärmungsplatte (1232) zu kontaktieren.

6. Kochvorrichtung (100, 200) nach Anspruch 3, wobei die elektromagnetische Induktionserwärmungseinrichtung (123, 223, 1230) an einem unteren Abschnitt des Körpers (120, 220, 1200, 2200) bereitgestellt ist und wobei der Körper (120, 220, 1200, 2200) ferner eine Infrarot-Erwärmungseinrichtung (1240) und eine Reflexionsplatte (1250) aufweist, die konfiguriert ist, Strahlungswärme von der Erwärmungsplatte (1232) zu reflektieren, wobei die Infrarot-Erwärmungseinrichtung (1240) und die Reflexionsplatte (1250) mit einem oberen Abschnitt des Körpers (120, 220, 1200, 2200) gekoppelt sind.

7. Kochvorrichtung (100, 200) nach Anspruch 1, wobei die elektronische Vorrichtung (113, 213) eine Anzeige (1130), auf der ein Betriebszustand der Kochvorrichtung (100, 200) und ein Menü angezeigt werden, und eine Eingabe (1140) aufweist, die eine Auswahl des Menüs ermöglicht.

8. Kochvorrichtung (100, 200) nach Anspruch 1, wobei die Tür (110, 210, 1100, 2210) ferner einen Haltedraht (1160) aufweist, der konfiguriert ist, Lebensmittel zu tragen, wobei der Haltedraht (1160) in Abhängigkeit von dem Öffnen und Schließen der Tür (110, 210, 1100, 2210) aus dem Raum des Körpers (120, 220, 1200, 2200) herausgezogen wird und in den Raum hineingezogen wird, um der elektromagnetischen Induktionserwärmungseinrichtung (123, 223, 1230) zugewandt zu sein.

## Revendications

1. Appareil de cuisson à chauffage par induction électromagnétique (100, 200), comprenant :
un corps (120, 220, 1200, 2200) comprenant un émetteur d'énergie sans fil (121, 221, 1210, 2210) qui est configuré pour émettre de l'énergie sans fil ;
un premier module de communication sans fil (122, 222, 1220, 2220) qui est configuré pour émettre et recevoir des signaux sans fil ; et
un chauffage à induction électromagnétique (123, 223, 1230) qui est configuré pour chauffer des aliments, logé dans un espace dans le corps (120, 220, 1200, 2200) en utilisant un courant induit ; et
**caractérisé par** :
une porte (110, 210, 1100, 2210) comprenant un récepteur d'énergie sans fil (111, 211) ; un deuxième module de communication sans fil (112, 221) positionné pour faire face au premier module de communication sans fil (122, 222, 1220, 2220) du corps (120, 220, 1200, 2200) sur la base de la fermeture de la porte (110, 210, 1100, 2210) ; et
un dispositif électronique (113, 213) configuré pour recevoir de l'énergie par l'intermédiaire du récepteur d'énergie sans fil (111, 211), dans lequel la porte (110, 210, 1100, 2210) est couplée au corps (120, 220, 1200, 2200) de telle sorte que la porte (110, 210, 1100, 2210) ouvre et ferme l'espace dans le corps (120, 220, 1200, 2200).

2. Appareil de cuisson (100, 200) selon la revendication 1, dans lequel l'émetteur d'énergie sans fil (121, 221, 1210, 2210) comprend une bobine d'émission (1211), dans lequel le récepteur d'énergie sans fil (111, 211) comprend une bobine de réception (1111) faisant face à la bobine d'émission (1211), et dans lequel la bobine d'émission (1211) est adjacente à la bobine de réception (1111) lorsque la porte (110, 210, 1100, 2210) est couplée au corps (120, 220, 1200, 2200) pour recouvrir l'espace.

3. Appareil de cuisson (100, 200) selon la revendication 1, dans lequel le chauffage à induction électromagnétique (123, 223, 1230) comprend :
une bobine de travail (1231) configurée pour générer un courant induit ;
une plaque chauffante (1232) qui est composée d'un matériau magnétique et est configurée pour générer de la chaleur avec le courant induit ; et
un panneau inférieur (1233) configuré pour supporter la plaque chauffante (1232) et qui est disposé entre la bobine de travail (1231) et la plaque chauffante (1232).

4. Dispositif de cuisson (100, 200) selon la revendication 3, dans lequel le chauffage à induction électromagnétique (123, 223, 1230) comprend en outre :
un capteur de température (1234) configuré pour mesurer une température de la plaque chauffante (1232), dans lequel une extrémité du capteur de température (1234) est insérée dans un trou formé dans le panneau inférieur (1233) et est en contact avec la plaque chauffante (1232).

5. Dispositif de cuisson (100, 200) selon la revendication 3, dans lequel une partie du panneau inférieur (1233) est transparente et dans lequel le chauffage à induction électromagnétique (123, 223, 1230) comprend en outre un capteur de température sans contact configuré pour mesurer une température de la plaque chauffante (1232) sans établir de contact avec la plaque chauffante (1232).

6. Appareil de cuisson (100, 200) selon la revendication 3, dans lequel le chauffage à induction électromagnétique (123, 223, 1230) est disposé sur une partie plus basse du corps (120, 220, 1200, 2200) et dans lequel le corps (120, 220, 1200, 2200) comprend en outre un chauffage infrarouge (1240) et une plaque réfléchissante (1250) configurée pour réfléchir de la chaleur rayonnante provenant de la plaque chauffante (1232), le chauffage infrarouge (1240) et la plaque réfléchissante (1250) étant couplés à une partie supérieure du corps (120, 220, 1200, 2200).

7. Appareil de cuisson (100, 200) selon la revendication 1, dans lequel le dispositif électronique (113, 213) comprend un écran (1130), sur lequel un état de fonctionnement de l'appareil de cuisson (100, 200) et un menu sont affichés, et une entrée (1140) qui permet de sélectionner le menu.

8. Appareil de cuisson (100, 200) selon la revendication 1, dans lequel la porte (110, 210, 1100, 2210) comprend en outre un fil de maintien (1160) configuré pour supporter des aliments, dans lequel le fil de maintien (1160) est tiré hors de l'espace du corps (120, 220, 1200, 2200) et est tiré dans l'espace pour faire face au chauffage à induction électromagnétique (123, 223, 1230) en fonction de l'ouverture et de la fermeture de la porte (110, 210, 1100, 2210).
